# EUROPÄISCHE PATENTSCHRIFT

(11) **EP 2 942 138 B1**
(45) Veröffentlichungstag und Bekanntmachung des Hinweises auf die Patenterteilung: **30.03.2022**
(21) Anmeldenummer: 15165476.1
(22) Anmeldetag: 28.04.2015
(51) Int. Cl.: B23D 55/08

(54) **BANDFÜHRUNG FÜR EIN SÄGEBAND EINER SÄGEMASCHINE**
BAND GUIDE FOR A SAW BAND OF A SAWING MACHINE
GUIDAGE POUR UN RUBAN D'UNE SCIE

(30) Priorität: 07.05.2014 DE 102014208533
(43) Veröffentlichungstag der Anmeldung: 11.11.2015
(73) Patentinhaber: KEURO Besitz GmbH & Co. EDV-Dienstleistungs KG, 77855 Achern (DE)
(72) Erfinder: Kühn, Lothar, 77876 Kappelrodeck (DE); Röhl, Eric, 77866 Rheinau-Freistett (DE); Krebber, Sönke Florian, 76530 Baden-Baden (DE); Krebber, Nicole-Désirée, 76530 Baden-Baden (DE)
(74) Vertreter: Lemcke, Brommer & Partner Patentanwälte Partnerschaft mbB

(56) Entgegenhaltungen:
- EP-A2- 2 158 992
- WO-A1-2006/002536
- DE-A1- 19 828 589
- US-A- 3 104 575
- US-A- 3 489 189
- US-A- 3 557 848
- US-A1- 2006 174 497
- US-A1- 2008 173 151
- US-B1- 6 202 528

## Beschreibung

Die vorliegende Erfindung betrifft eine Bandführung für ein Sägeband einer Sägemaschine, wie sie im Oberbegriff des Patentanspruchs 1 definiert ist. US3557848 offenbart eine solche Bandführung gemäß dem Oberbegriff des Anspruchs 1.

### Diese

Bandführung umfasst Gleitstücke, die für einen gleitenden Kontakt mit dem Sägeband vorgesehen sind. Sie umfasst ferner eine Halterung, an der die Gleitstücke mittels lösbarer Befestigungsmittel gehalten sind und die an der Sägemaschine angebracht werden kann.

Sägemaschinen mit Sägeband bestehen üblicherweise aus einem Sägetisch, auf dem das zu sägende Material eingespannt wird, und einem relativ zum Sägetisch beweglichen Sägenoberteil, in welchem das Sägeband um mindestens zwei Laufräder umläuft, um die spanabhebende Längsbewegung der am Sägeband angebrachten Sägezähne zu erzeugen. Der Sägevorschub erfolgt mittels einer Relativbewegung zwischen dem Sägenoberteil und dem Sägetisch.

Um das Sägeband beim Sägen zu stabilisieren und insbesondere Schwingungen des Sägebands oder ein Verziehen zu unterdrücken bzw. zu minimieren, ist es üblich, möglichst nahe am zu sägenden Werkstück Bandführungen der eingangs genannten Art vorzusehen, die in der Regel beide Seitenflächen des Sägebands zumindest zeitweise gleitend kontaktieren und hierdurch führen. In der Regel sind solche Bandführungen möglichst kurz vor dem Eintritt und möglichst kurz nach dem Austritt in das bzw. aus dem zu sägenden Werkstück angeordnet. Führungen für das Sägeband einer Bandsägemaschine sind oft zangenartig ausgebildet, wobei beidseits des Sägebandes Hartmetallgleitstücke für eine seitliche Bandführung sorgen, während der Sägebandrücken entweder über Laufrollen oder ebenfalls mittels Hartmetallgleitstücken geführt wird. Ein Beispiel für eine entsprechende Bandführung ist in der DE-A-198 28 589 offenbart. Insbesondere bei Sägemaschinen mit hohen Zerspanungsleistungen sind auch die seitlichen Bandführungen stark belastet, da das Sägeband bestrebt ist, dem Schnittdruck durch ein seitliches Wegkippen auszuweichen. Dies bedeutet, dass die Gleitstücke derjenigen seitlichen Bandführung, die das Sägeband am Wegkippen hindert, permanent in gleitendem Kontakt mit dem Sägeband stehen und eine hohe Normalkraft auf sie wirkt.

Es ist daher vorgeschlagen worden, die Gleitstücke von Bandführungen für ein Sägeband einer Sägemaschine mittels lösbarer Befestigungsmittel an einer entsprechenden Halterung anzubringen, so dass sie bei einem Verschleiß unaufwändig ausgetauscht werden können. Beispiele hierfür finden sich in der US-A-2006/0174497 und in der WO-A-2006/002536. Auch die US 3,557,848 offenbart eine Bandsägemaschine mit zwei Bandführungen, von denen eine Bandführung Gleitstücke aufweist, welche an einer Halteplatte über Schrauben lösbar befestigt sind.

Je höher die Zerspanungsleistungen von Sägemaschinen werden, um so höher sind die Anforderungen an die Bandführungen, insbesondere an die seitlichen Bandführungen. Diese müssen daher möglichst optimal an die Geometrie des Sägebands sowie an dessen Bewegungsverlauf angepasst sein; letzteres insbesondere dann, wenn das Sägeband in einer Ebene um die Laufrollen läuft, die zur Schnittebene geneigt ist oder die parallel zur Schnittebene steht, denn dann muss das Sägeband vor seinem Eintritt in das zu sägende Werkstück und nach Verlassen desselben in die Schnittebene gedreht und aus der Schnittebene wieder zurückgedreht werden. Des Weiteren ist auch ein Augenmerk darauf zu richten, dass sich keine Späne an der Bandführung sammeln und festsetzen können. Die Gleitstücke der Bandführung müssen schließlich auch so angeordnet sein, dass Kühl- und Schmierflüssigkeit an alle Gleitstücke herangebracht werden kann, um die Reibung zwischen den Gleitstücken und dem Sägeband zu verringern.

Die obigen Anforderungen führten im Stand der Technik zu unterschiedlichen Anordnungen der Gleitstücke. In der US-A-3,104,575 sind beispielsweise Bandführungen mit Gleitstücken offenbart, die die Seitenfläche des Sägebands möglichst gleichzeitig und ganzflächig kontaktieren, während in der EP-A-2 158 992 die Gleitstücke schräggestellt sind, um etwaige Späne durch die Bewegung des Sägebands in Richtung von dessen Zähnen abzuleiten.

Ausgehend von diesem Stand der Technik liegt der vorliegenden Erfindung die Aufgabe zugrunde, eine Bandführung vorzuschlagen, die den voranstehend skizzierten, unterschiedlichen Anforderungen besser als bisher entspricht.

Gelöst ist diese Aufgabe durch eine Bandführung mit den Merkmalen des Patentanspruchs 1. Bevorzugte Ausgestaltungen und Weiterbildungen der erfindungsgemäßen Bandführung sind in den Patentansprüchen 2 bis 9 niedergelegt.

Die vorliegende Erfindung schlägt demnach eine Bandführung vor, die eine an der Sägemaschine anbringbare Halterung umfasst, an welcher die Gleitstücke mittels lösbarer Befestigungsmittel gehalten sind. Die Halterung weist eine im Wesentlichen ebene Montagefläche zum Anbringen der Gleitstücke auf. Diese Montagefläche ist mit einer Mehrzahl von Befestigungsstellen für die Gleitstücke versehen, wobei die Anzahl der Befestigungsstellen größer ist als die Anzahl der Gleitstücke. Die Befestigungsstellen sind an der Halterung solcherart angeordnet, dass die Gleitstücke zum Anpassen der Bandführung an unterschiedliche Sägebänder auf der Halterung in unterschiedliche Positionen umgesetzt werden können.

Hierdurch ergibt sich eine große Flexibilität in der Anordnung der Gleitstücke der erfindungsgemäßen Bandführung, denn die Gleitstücke können an vorzugsweise vielen unterschiedlichen Positionen angebracht und aufgrund der lösbaren Befestigung auch bedarfsweise umgesetzt werden. So ist es beispielsweise möglich, bei einem Umrüsten der Sägemaschine auf ein Sägeband größerer Breite die Gleitstücke der erfindungsgemäßen Bandführung so zu versetzen, dass das Sägeband weiterhin möglichst ganzflächig geführt wird. Die Gleitstücke können auch umgesetzt werden, um unterschiedlichen Anforderungen besser entsprechen zu können, die aus unterschiedlichen gesägten Materialien und deren spezifischen Spänen erwachsen. Schließlich können die Gleistücke auch anhand eines Verschleißbildes umgesetzt werden, um ihre Anordnung an spezifische Produktionsbedingungen vor Ort besser anpassen zu können.

Bei der erfindungsgemäßen Bandführung ist es erstmals möglich, die Gleitstücke für jeden Einsatzzweck variabel anzuordnen und gegebenenfalls sogar vor Ort die Anordnung zu ändern. Des Weiteren ergeben sich durch die erfindungsgemäße Ausgestaltung der Bandführung signifikante Einsparungen bei der Produktion und bei der Ersatzteil-Lagerhaltung, da die Erfindung eine Art Baukastensystem verwirklicht.

Vorzugsweise sind die Befestigungsstellen für die Gleitstücke an der Montagefläche der Halterung in einem Raster, insbesondere einem regelmäßigen Raster angeordnet. Ein solches Raster ermöglicht eine besonders einfache Anpassung an individuelle Gegebenheiten, da die Gleitstücke in besonders viele Positionen umgesetzt werden können.

Eine sehr unkompliziert, aber wirkungsvoll umzusetzende Befestigung der Gleitstücke der erfindungsgemäßen Bandführung kann mittels einerseits Schrauben oder Gewindestiften und andererseits Gewindebohrungen erfolgen, wobei die Befestigungsstellen in der Montagefläche im Wesentlichen aus jeweils mindestens einer Gewindebohrung bestehen. Die Gleitstücke können dann ganz einfach auf die Montagefläche der Halterung aufgeschraubt werden.

Hierbei weisen die Gleitstücke vorzugsweise mindestens zwei Senkbohrungen zum versenkten Einsetzen von Schrauben auf, während die Befestigungsstellen in der Montagefläche im Wesentlichen aus jeweils mindestens zwei Gewindebohrungen bestehen. Wenn die Befestigungsstellen in einem regelmäßigen Raster angeordnet sind, bilden jeweils mindestens zwei benachbarte Gewindebohrungen im Raster die entsprechenden Befestigungsstellen.

Die Senkbohrungen bieten den Vorteil, dass die Schrauben zum Aufschrauben der Gleitstücke innerhalb derselben versenkt werden können, so dass die Oberseiten der Gleitstücke, die für einen gleitenden Kontakt mit dem Sägeband vorgesehen sind, von der Verschraubung unbeeinflusst bleiben und die Schraubenköpfe in jedem Fall genügend Abstand zum Sägeband halten, auch bei zunehmendem Verschleiß der Gleitstücke. Das Vorsehen von zwei Senkbohrungen gewährleistet, dass die Gleistücke mit zwei Schrauben an der Montagefläche befestigt werden können, was sie verdrehsicher und stabil fixiert.

Eine alternative Realisierung der lösbaren Befestigung der Gleitstücke an der Montagefläche der erfindungsgemäßen Bandführung besteht in formschlüssigen Steckverbindungen zwischen den Gleitstücken und der Halterung. Diese können auf unterschiedliche Arten ausgestaltet sein, beispielsweise mittels Stiften, Zähnen oder Feder-Nut- Verbindungen sowie Clip-Verbindungen. Bevorzugt werden selbstsichernde Stifte mit Spannhülsen verwendet, beispielsweise in zylindrischer Form oder, wegen der Verdrehsicherung, mit abgekantetem Querschnitt, wobei die Spannhülse ein unbeabsichtigtes Lösen der formschlüssigen Verbindung verhindert und dennoch ermöglicht, das Gleitstück vom Stift abzuziehen. Das Abziehen des Gleitstücks vom Stift erfolgt in diesem Fall in eine Richtung, in der vom Sägeband keinesfalls eine Kraft auf das Gleitstück ausgeübt wird, nämlich von der Halteplatte weg.

Eine weitere Möglichkeit für eine formschlüssige Steckverbindung besteht darin, dass die Befestigungsmittel eine in die Montagefläche eingebrachte Nut zur Aufnahme eines Gleitstücks umfassen können, wobei die Nut in Bewegungsrichtung des Sägebands eine Anschlagsfläche zum Anlegen des Gleitstücks aufweist. Die vom Sägeband auf das Gleitstück übertragenen Kräfte stützen sich dann zum einen am Nutboden und zum anderen an der Anschlagsfläche ab. Ein zusätzlicher Stift mit selbstsichernder Spannhülse oder eine Schraubverbindung mit einer Schraube oder einem Gewindestift, deren Widerstandsfähigkeit dann von untergeordneter Wichtigkeit ist, kann beispielsweise das Gleitstück in der Nut gegen ein Herausfallen sichern.

Eine solche Sicherung kann vorzugsweise auch darin bestehen, dass die Anschlagsfläche der Nut mit einem Hinterschnitt versehen ist, während das Gleitstück ein Formteil zum Einsetzen in den Hinterschnitt der Anschlagsfläche aufweist, so dass an der Anschlagsfläche auch gegen ein Herausfallen des Gleitstücks aus der Nut eine formschlüssige Verbindung entsteht. Gleichwohl kann das Gleitstück wieder aus der Nut entnommen werden, indem es aus dem Hinterschnitt an der Anschlagsfläche in Gegenrichtung der Sägebandbewegung herausgezogen wird. Gegebenenfalls kann ein Federelement oder ein Rastelement vorgesehen sein, das das Gleitstück im Hinterschnitt der Anschlagsfläche sichert.

Im Rahmen der vorliegenden Erfindung ist es schließlich bevorzugt, wenn die Gleitstücke aus einem in Form gepressten und durch Sintern gehärteten Metallpulver hergestellt sind, vorzugsweise mit abgerundeten oder zumindest angefasten Kanten, soweit diese mit dem Sägeband in Berührung kommen. Die Gleitstücke können jedoch auch aus einem keramischen Material gefertigt sein oder in konventioneller Weise aus Hartmetall bestehen.

Das erfindungsgemäße lösbare Anbringen der Gleitstücke an einer ebenen Montagefläche führt zu einer hohen Maßhaltigkeit der Oberflächen der Gleitstücke, die mit dem Sägeband in Berührung kommen sollen. Das Nachbearbeiten dieser Oberflächen der Gleitstücke, um die Oberflächen plan zu machen, ist dann nicht nötig. Im Stand der Technik war dies bislang notwendig, da die Gleitstücke durch Löten an den Halterungen angebracht wurden. Beim Löten kann jedoch nicht gewährleistet werden, dass die Gleitstücke völlig plan auf der Halterung befestigt werden.

Ein weiterer Vorteil der lösbaren Befestigung der Gleitstücke auf einer ebenen Montagefläche mit einer Mehrzahl von Befestigungsstellen ist ferner die Möglichkeit, die Gleitstücke relativ klein auszubilden und große Zwischenräume zwischen den einzelnen Gleitstücken frei zu lassen. Gleichzeitig ist es durch die hohe Maßhaltigkeit der lösbaren Verbindung möglich, die Gleitstücke mit einer vergleichsweise großen Bauhöhe zu versehen, so dass im Ergebnis zwischen den Gleitstücken der erfindungsgemäßen Bandführung größere Zwischenräume mit größeren Volumina vorgesehen sein können, als dies im Stand der Technik bislang üblich war. Es verbleibt so ein relativ großer Abstand zwischen der Montagefläche der Halterung und dem Sägeband; der hierdurch entstehende lichte Raum ist vergleichsweise groß, so dass etwa in die Bandführung gelangende Späne keine Probleme verursachen können.

Nicht zuletzt ermöglicht die unüblich große Bauhöhe der Gleitstücke auch eine lange Standzeit der Sägen, da viel Verschleißmaterial vorgesehen werden kann.

Einige Ausführungsbeispiele für eine erfindungsgemäß ausgestaltete Bandführung sind im Folgenden anhand der beigefügten Zeichnungen näher beschrieben und erläutert. Es zeigen:
- Figur 1: eine schematische perspektivische Darstellung einer Bandführungseinheit einer Sägemaschine mit einem Ausführungsbeispiel für eine erfindungsgemäße Bandführung;
- Figur 2: eine schematische Schnittdarstellung der Bandführungseinheit aus Figur 1;
- Figur 3: ein Gleitstück in perspektivischer Ansicht;
- Figur 4: ein Gleitstück in seitlicher Schnittdarstellung;
- Figur 5: eine Ansicht einer Montagefläche einer Halterung eines Ausführungsbeispiels für eine erfindungsgemäße Bandführung;
- Figur 6a -6e: die Halterung aus Figur 5 mit unterschiedlich angebrachten Gleitstücken;
- Figur 7: einen Teil einer anderen Ausführungsform einer Bandführung mit einem Gleitstück in Draufsicht;
- Figur 8: der in Figur 7 dargestellte Teil der Bandführung im Schnitt entlang der Linie A-A.

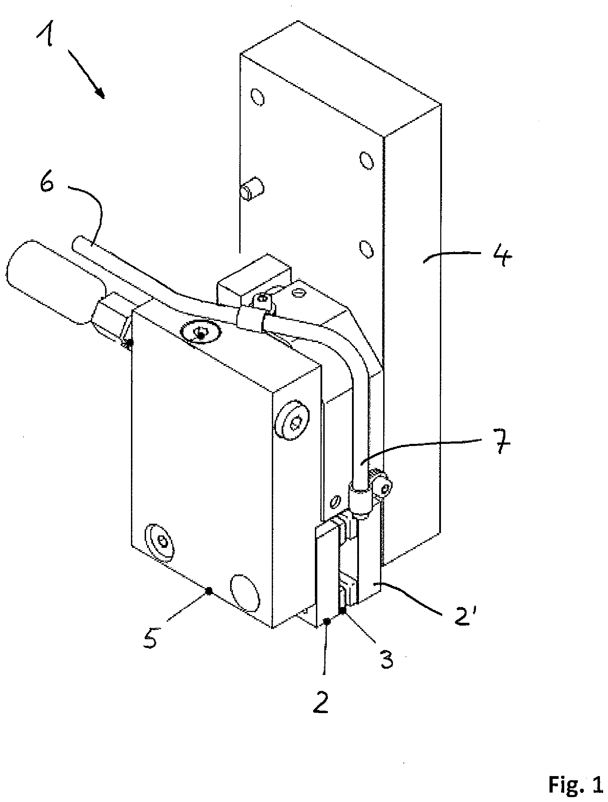

Figur 1 zeigt in perspektivischer Ansicht eine Bandführungseinheit 1 für eine Sägemaschine, wie sie in der Regel vor dem Eintritt und nach dem Austritt des (nicht dargestellten) Sägebandes in das bzw. aus dem zu sägenden Material (ebenfalls nicht dargestellt) angeordnet ist. Die Bandführungseinheit 1 enthält unter anderem zwei erfindungsgemäß ausgestaltete Bandführungen, die hier jeweils aus einer Halterung 2, 2' mit daran angebrachten Gleitstücken 3 für einen Kontakt mit den Seitenflächen des Sägebands bestehen. Dementsprechend läuft das Sägeband zwischen den Halterungen 2 und 2' hindurch und wird so insbesondere seitlich geführt, um ein Wegkippen des Sägebands zu verhindern.

Die Bandführungseinheit 1 umfasst darüber hinaus einen Montageblock 4 zum Anbringen an das (nicht dargestellte) Sägenoberteil einer Bandsägemaschine, einen Bandführungsblock 5, der insbesondere die beiden erfindungsgemäß ausgestalteten Bandführungen 2, 3 enthält, sowie eine Kühlmittelzuführung 6, über die Kühlmittel bis zu einem Kühlmittelauslass 7 zugeführt werden kann. Über den Kühlmittelauslass 7 gelangt flüssiges Kühlmittel schließlich auf das zwischen den beiden Halterungen 2, 2' hindurchgeführte Sägeband sowie letztlich zwischen das Sägeband und die Gleitstücke 3, was neben einem kühlenden auch einen schmierenden Effekt bewirkt.

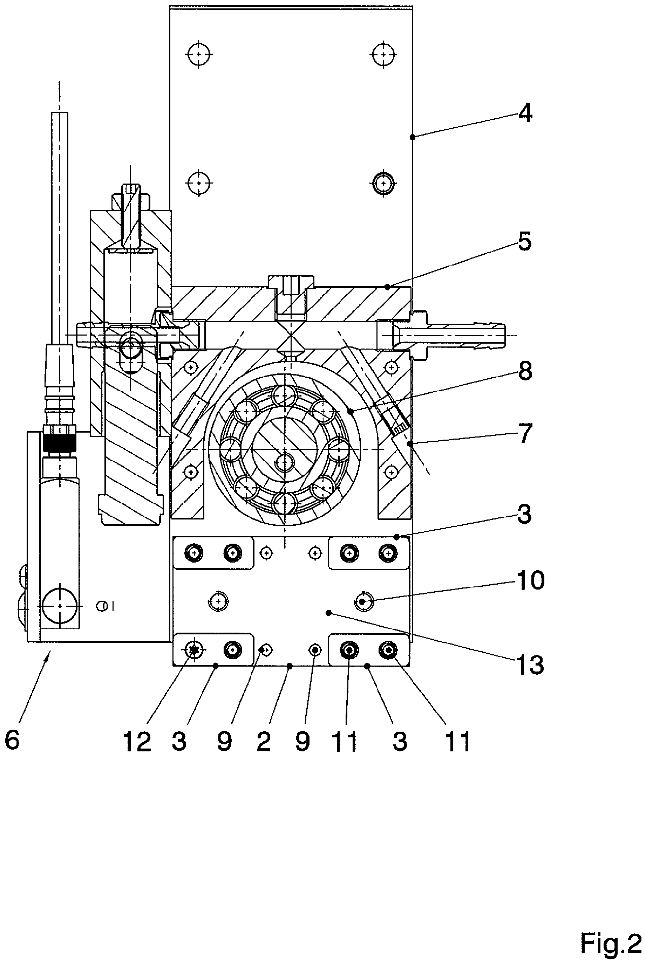

Figur 2 zeigt in einer schematischen Schnittdarstellung, bei der der Schnitt in der Ebene des (nicht dargestellten) Sägebands zwischen den beiden Halterungen 2, 2' gemäß Figur 1 verläuft, das Innere des Bandführungsblocks 5, der zusammen mit dem Montageblock 4 und der Kühlmittelzuführung 6 die Bandführungseinheit 1 bildet. Oberhalb der erfindungsgemäß ausgestalteten Bandführung mit Halterung 2 und Gleitstücken 3 ist eine Bandrückenführung 8 angeordnet, die als gelagerte Rolle ausgebildet ist, um möglichst reibungsarm auf dem Bandrücken abrollen zu können. Über diese Bandrückenführung 8 wird die für die Zerspanung des zu sägenden Materials erforderliche Schnittkraft auf das Sägeband aufgebracht.

Das in Figur 2 dargestellte Ausführungsbeispiel für die erfindungsgemäß ausgestaltete Bandführung für die seitliche Führung des Sägebands besteht aus der Halterung 2 und vier Gleitstücken 3, die jeweils mittels Schraubverbindungen lösbar an der Halterung 2 bzw. an ihrer eben geformten Montagefläche 13 befestigt sind. Hierfür verfügen die Gleitstücke 3 über jeweils zwei Senkbohrungen 11 zur Aufnahme von Schrauben 12, wobei vorliegend nur eine Schraube 12 im links unten angeordneten Gleitstück 3 angedeutet ist.

Die Montagefläche 13 der Halterung 2 weist neben den Befestigungsstellen, an denen die Gleitstücke 3 befestigt sind, weitere Befestigungsstellen 9 auf, um die Gleitstücke 3 bedarfsweise umsetzen zu können. Beispielsweise kann es je nach verwendetem Sägeband vorteilhaft sein, das links unten dargestellte Gleitstück 3 um eine Befestigungsstelle 9 nach rechts zu versetzen und dergleichen mehr. Die Befestigungsstellen 9 sind in diesem Ausführungsbeispiel als Gewindebohrungen ausgestaltet.

Die Halterung 2 ist ebenfalls lösbar, und zwar mittels Fixierschrauben 10 am Bandführungsblock 5 der Bandführungseinheit 1 und damit letztlich an der Sägemaschine befestigt. Aus Gründen der Stabilität und der Verdrehsicherheit sind zwei Fixierschrauben 10 vorgesehen, wie auch alle Gleitstücke 3 mit jeweils zwei Senkbohrungen 11 versehen sind, um sie mit jeweils zwei Schrauben an der Montagefläche 13 der Halterung 2 befestigen zu können.

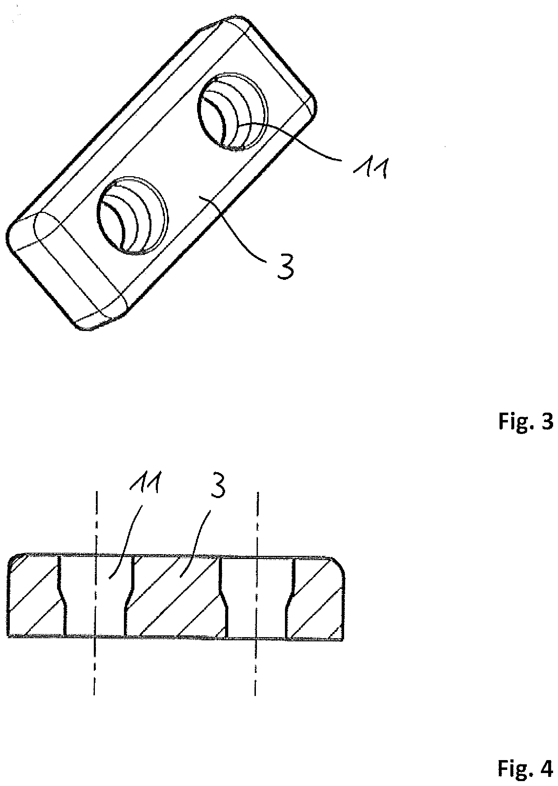

Die Figuren 3 und 4 zeigen in einer Perspektive bzw. in einer seitlichen Schnittdarstellung ein Gleitstück 3 aus Figur 2 im Detail. Dieses Gleitstück 3 wurde aus Metallpulver gepresst und durch Sintern gehärtet. Es weist zwei Senkbohrungen 11 auf, die es ermöglichen, die Schrauben 12 so tief in das Gleitstück 3 zu versenken, dass deren Köpfe einige Millimeter unterhalb der Oberfläche des Gleitstücks 3 zu liegen kommen. Das Gleitstück 3 kann daher durch reibenden Kontakt mit dem Sägeband um einige Millimeter verschleißen, ohne dass der damit zusammenhängende Materialabtrag die Gefahr mit sich brächte, dass die Schrauben 12 mit dem Sägeband in Berührung kommen.

Die Kanten des Gleitstücks 3, die dessen für einen gleitenden Kontakt mit dem Sägeband vorgesehenen Oberfläche begrenzen, sind, wie insbesondere Figur 4 deutlich macht, zur Schonung des Sägebandes abgerundet. Die Bauhöhe des Gleitstücks 3, das plan auf die Montagefläche 13 der Halterung 2 aufgesetzt und dann mit dieser verschraubt wird, stellt sicher, dass das Sägeband besonders weit von der Montagefläche 13 der Halterung 2 beabstandet ist. Der sich hierdurch ergebende, besonders groß ausfallende lichte Raum zwischen der Montagefläche 13, den Gleitstücken 3 und dem Sägeband verhindert zuverlässig, dass sich etwaige Späne an der Bandführung festsetzen und ansammeln können.

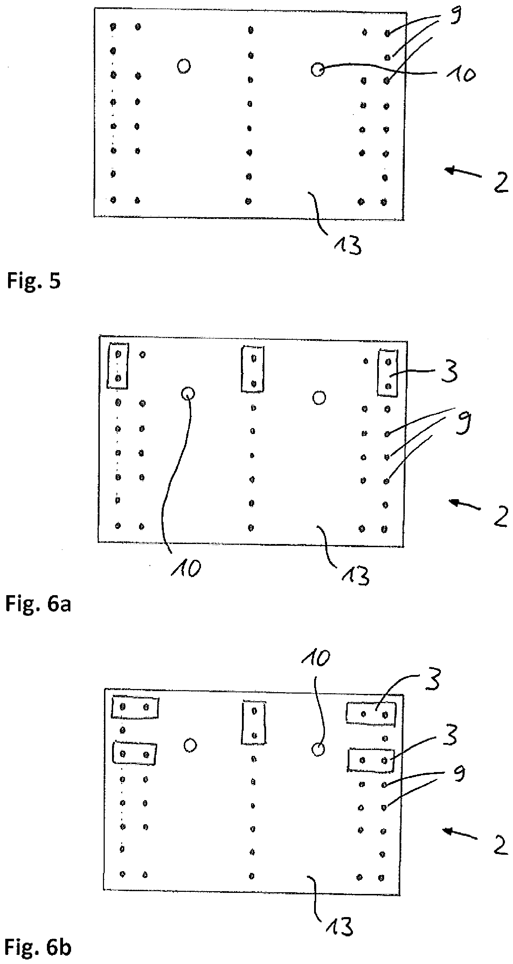

Figur 5 zeigt in Draufsicht die Montagefläche 13 einer Halterung 2 eines weiteren Ausführungsbeispiels für eine erfindungsgemäße Bandführung. Diese Halterung 2 ist mit einer Vielzahl von Befestigungsstellen 9 versehen, die in einem unregelmäßigen Raster angeordnet sind und verschiedenste Anordnungen von Gleitstücken 3 ermöglichen.

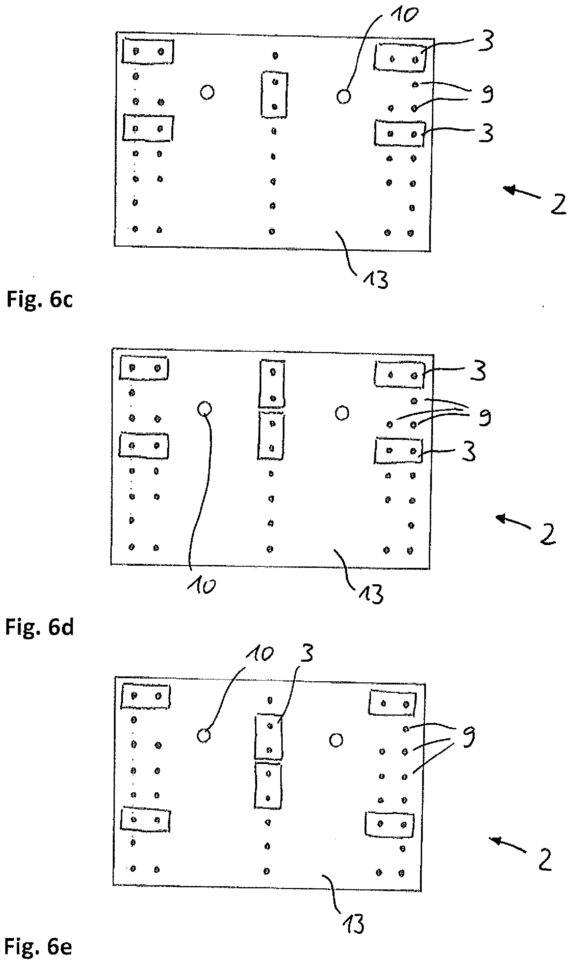

Einige Beispiele für unterschiedliche Anordnungen von Gleitstücken 3 auf der Montagefläche 13 der in Figur 5 dargestellten Halterung 2 zeigen die Figuren 6a bis 6e. Die Anordnung der Gleitstücke 3 in Figur 6a dient zu Führung eines Sägebands mit geringer Sägebandbreite, wohingegen die Anordnungen der Figuren 6b, 6c, 6d und 6e für Sägebänder vorgesehen sind, deren Breite jeweils um eine Stufe zunimmt. Alle in Figur 6 gezeigten Anordnungen von Gleitstücken 3 sind auf ein und derselben Halterung 2, die in Figur 5 dargestellt ist, realisierbar. Mit diesem Baukastensystem können sowohl auf der Hersteller- als auch auf der Anwenderseite Einsparungen beim Anfertigen bzw. Vorhalten von Ersatzteilen erzielt werden.

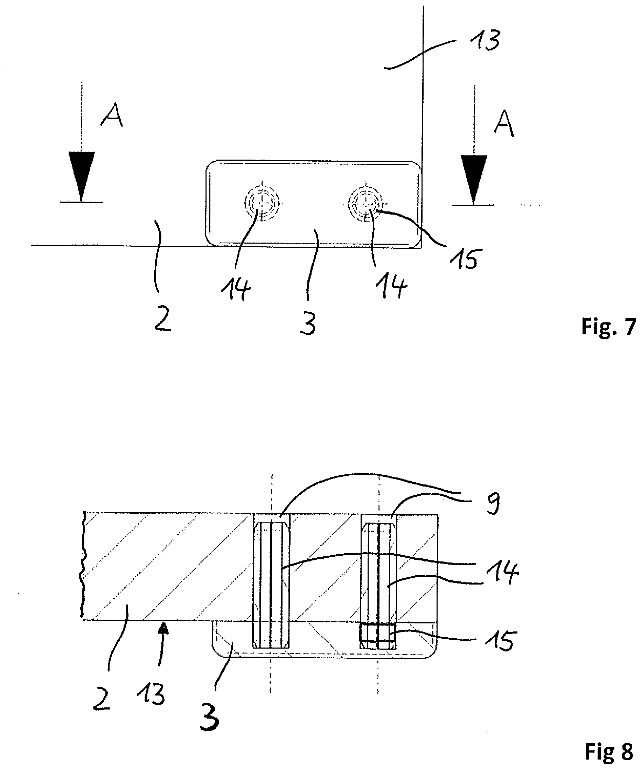

In den Figuren 7 und 8 ist ein Teil eines anderen Ausführungsbeispiels für eine erfindungsgemäß ausgestaltete Bandführung mit Halterung 2 und Gleitstück 3 dargestellt, und zwar in Figur 7 in einer Draufsicht auf die Montagefläche 13 der Halterung 2 und die Oberfläche des Gleitstücks 3 und in Figur 8 im Schnitt entlang der Linie A-A gemäß Figur 7.

Das Gleitstück 3 besteht hier wiederum aus einem gepressten und durch Sintern gehärteten Metallpulver und ist wiederum an zwei Befestigungsstellen 9 an der Halterung 2 befestigt. Diese Befestigungsstellen 9 sind allerdings in diesem Ausführungsbeispiel nicht als Gewindebohrungen, sondern als zylindrische Bohrungen ausgestaltet, in die zylindrische Stifte 14 eingesteckt werden. Diese zylindrischen Stifte 14 werden in rückseitige, zylindrische Öffnungen im Gleitstück 3 eingesteckt, wobei, wie in Figur 8 angedeutet, eine auf dem Stift 14 sitzende Spannhülse 15 dafür sorgt, dass der Stift 14 im Gleitstück 3 gesichert wird, so dass das Gleitstück 3 nicht von der Halterung 2 herunterfallen kann. Die Kräfte, die vom (nicht dargestellten) Sägeband auf das Gleitstück 3 ausgeübt werden, wirken in Richtung der Montagefläche 13 der Halterung 2 und/oder parallel zu dieser Montagefläche 13, jedoch niemals von der Montagefläche 13 weg gerichtet. Daher reicht es aus, wenn die Spannhülse 15 das Gleitstück 3 gegen ein Herabfallen sichert; die herrschenden Kräfte werden im Übrigen von den insoweit formschlüssig in der Halterung 2 und im Gleitstück 3 sitzenden Stiften 14 aufgenommen.

Wie Figur 8 schließlich noch verdeutlicht, ist in diesem Ausführungsbeispiel die Oberfläche der Gleitstücke 3, die mit dem Sägeband in Berührung kommen, geschlossen; es gibt keine Senkbohrungen in dieser Oberfläche, was je nach Anwendungsbereich vorteilhaft sein kann.

## Patentansprüche

1. Bandführung für ein Sägeband einer Sägemaschine, mit Gleitstücken (3) für einen gleitenden Kontakt mit dem Sägeband und mit einer an der Sägemaschine anbringbaren Halterung (2), an der die Gleitstücke (3) gehalten sind, wobei die Gleitstücke (3) mittels lösbarer Befestigungsmittel (9, 12) an der Halterung (2) gehalten sind und die Halterung (2) eine im Wesentlichen ebene Montagefläche (13) zum Anbringen der Gleitstücke (3) aufweist, **dadurch gekennzeichnet,**
**dass** die Montagefläche (13) mit einer Mehrzahl von Befestigungsstellen (9) für die Gleitstücke (3) versehen ist, wobei die Anzahl der Befestigungsstellen (9) größer ist als die Anzahl der Gleitstücke (3), und dass die Befestigungsstellen (9) an der Halterung (2) solcherart angeordnet sind, dass die Gleitstücke (3) zum Anpassen der Bandführung an unterschiedliche Sägebänder auf der Halterung (2) in unterschiedliche Positionen umgesetzt werden können.

2. Bandführung nach Anspruch 1,
**dadurch gekennzeichnet,**
**dass** die Befestigungsstellen (9) an der Halterung (2) in einem Raster, insbesondere einem regelmäßigen Raster angeordnet sind.

3. Bandführung nach einem der Ansprüche 1 oder 2,
**dadurch gekennzeichnet,**
**dass** die Befestigungsmittel Schrauben (12) oder Gewindestifte und Gewindebohrungen umfassen, und dass die Befestigungsstellen (9) in der Montagefläche (13) im Wesentlichen aus jeweils mindestens einer Gewindebohrung bestehen.

4. Bandführung nach Anspruch 3,
**dadurch gekennzeichnet,**
**dass** die Gleitstücke (3) mit mindestens zwei Senkbohrungen (11) zum versenkten Einsetzen von Schrauben (12) versehen sind, und dass die Befestigungsstellen (9) in der Montagefläche (13) im Wesentlichen aus jeweils mindestens zwei Gewindebohrungen bestehen.

5. Bandführung nach einem der Ansprüche 1 oder 2,
**dadurch gekennzeichnet,**
**dass** die Befestigungsmittel zum Herstellen von formschlüssigen Steckverbindungen zwischen den Gleitstücken (3) und der Halterung (2) vorgesehen sind.

6. Bandführung nach Anspruch 5,
**dadurch gekennzeichnet,**
**dass** die Befestigungsmittel selbstsichernde Stifte (14) mit Spannhülsen (15) umfassen.

7. Bandführung nach einem der Ansprüche 5 oder 6,
**dadurch gekennzeichnet,**
**dass** die Befestigungsmittel eine in die Montagefläche (13) eingebrachte Nut zur Aufnahme eines Gleitstücks (3) umfassen, wobei die Nut in Bewegungsrichtung des Sägebands eine Anschlagsfläche zum Anlegen des Gleitstücks (3) aufweist.

8. Bandführung nach Anspruch 7,
**dadurch gekennzeichnet,**
**dass** die Anschlagsfläche mit einem Hinterschnitt versehen ist und dass das Gleitstück (3) ein Formteil zum Einsetzen in den Hinterschnitt der Anschlagsfläche aufweist.

9. Bandführung nach mindestens einem der Ansprüche 1 bis 7,
**dadurch gekennzeichnet,**
**dass** die Gleitstücke (3) aus einem in Form gepressten und durch Sintern gehärteten Metallpulver und/oder Keramikmaterial hergestellt sind.

## Claims

1. Band guide for a saw band of a machine saw, having sliding blocks (3) for a sliding contact with the saw band and having a support (2) which can be mounted on the machine saw and on which the sliding blocks (3) are held, wherein the sliding blocks (3) are held on the support (2) by means of releasable fastening means (9, 12) and the support (2) has a substantially flat mounting surface (13) for mounting the sliding blocks (3),
**characterised in that**,
the mounting surface (13) is provided with a plurality of fastening points (9) for the sliding blocks (3), wherein the number of fastening points (9) is greater than the number of sliding blocks (3), and **in that**
the fastening points (9) on the support (2) are arranged in such a way that the sliding blocks (3) can be relocated in different positions on the support (2) in order to adapt the band guide to different saw bands.

2. Band guide according to claim 1,
**characterised in that**,
the fastening points (9) on the support (2) are arranged in a grid, in particular in a regular grid.

3. Band guide according to any one of claims 1 or 2,
**characterised in that**,
the fastening means comprise screws (12) or threaded rods and threaded holes, and **in that** the fastening points (9) in the mounting surface (13) substantially each consists of at least one threaded hole.

4. Band guide according to claim 3,
**characterised in that**,
the sliding blocks (3) are provided with at least two countersunk holes (11) for the countersunk insertion of screws (12), and **in that** the fastening points (9) in the mounting surface (13) substantially each consists of at least two threaded holes.

5. Band guide according to any one of claims 1 or 2,
**characterised in that**,
the fastening means are provided in order to produce form-fitting plug-in connections between the sliding blocks (3) and the support (2).

6. Band guide according to claim 5,
**characterised in that**,
the fastening means comprise self-locking pins (14) with clamping sleeves (15).

7. Band guide according to any one of claims 5 or 6,
**characterised in that**,
the fastening means comprise a groove introduced in the mounting surface (13) for receiving a sliding block (3), wherein the groove has a stop surface in the direction of movement of the saw band for abutting the sliding block (3).

8. Band guide according to claim 7,
**characterised in that**,
the stop surface is provided with an undercut and **in that** the sliding block (3) has a shaped part for inserting into the undercut of the stop surface.

9. Band guide according to at least one of claims 1 to 7,
**characterised in that**,
the sliding blocks (3) are produced from metal powder and/or ceramic material that is pressed into shape and hardened by sintering.

## Revendications

1. Guidage de ruban pour un ruban d'une scie, avec des pièces coulissantes (3) pour un contact coulissant avec le ruban et avec un support (2) pouvant être monté sur la scie, au niveau duquel les pièces coulissantes (3) sont maintenues, dans lequel les pièces coulissantes (3) sont maintenues à l'aide de moyens de fixation (9, 12) amovibles au niveau du support (2) et le support (2) présente une surface de montage (13) sensiblement plane pour le montage des pièces coulissantes (3),
**caractérisé en ce que**,
la surface de montage (13) est pourvue d'une pluralité de points de fixation (9) pour les pièces coulissantes (3), dans lequel le nombre de points de fixation (9) est supérieur au nombre de pièces coulissantes (3), et que
les points de fixation (9) sont agencés au niveau du support (2) de telle manière que les pièces coulissantes (3) puissent être converties pour l'adaptation du guidage de ruban aux rubans différents sur le support (2) dans différentes positions.

2. Guidage de ruban selon la revendication 1,
**caractérisé en ce que**,
les points de fixation (9) sont agencés au niveau du support (2) dans une trame, en particulier une trame régulière.

3. Guidage de ruban selon l'une quelconque des revendications 1 ou 2,
**caractérisé en ce que**,
les moyens de fixation comprennent des vis (12) ou tiges filetées et alésages filetés, et que les points de fixation (9) dans la surface de montage (13) se composent sensiblement de respectivement au moins un alésage fileté.

4. Guidage de ruban selon la revendication 3,
**caractérisé en ce que**,
les pièces coulissantes (3) sont pourvues d'au moins deux contre-alésages (11) pour l'insertion noyée de vis (12), et que les points de fixation (9) dans la surface de montage (13) se composent sensiblement de respectivement au moins deux alésages filetés.

5. Guidage de ruban selon l'une quelconque des revendications 1 ou 2,
**caractérisé en ce que**,
les moyens de fixation sont prévus pour la fabrication de liaisons par enfichage à complémentarité de formes entre les pièces coulissantes (3) et le support (2).

6. Guidage de ruban selon la revendication 5,
**caractérisé en ce que**,
les moyens de fixation comprennent des tiges (14) autobloquantes avec des douilles de serrage (15).

7. Guidage de ruban selon l'une quelconque des revendications 5 ou 6,
**caractérisé en ce que**,
les moyens de fixation comprennent une rainure pratiquée dans la surface de montage (13) pour la réception d'une pièce coulissante (3), dans lequel la rainure dans le sens de déplacement du ruban présente une surface de butée pour le placement de la pièce coulissante (3).

8. Guidage de ruban selon la revendication 7,
**caractérisé en ce que**,
la surface de butée est pourvue d'une contre-dépouille et que la pièce coulissante (3) présente une pièce formée pour l'insertion dans la contre-dépouille de la surface de butée.

9. Guidage de ruban selon au moins l'une quelconque des revendications 1 à 7, **caractérisé en ce que**,
les pièces coulissantes (3) sont fabriquées en une poudre métallique et/ou matériau céramique durci par frittage et pressé en forme.
